(19) **Europäisches Patentamt**
**European Patent Office**
**Office européen des brevets**

(11) **EP 4 700 355 A1**

(12) **EUROPEAN PATENT APPLICATION**
published in accordance with Art. 153(4) EPC

(43) Date of publication:
**25.02.2026 Bulletin 2026/09**

(21) Application number: **24811165.0**

(22) Date of filing: **23.05.2024**

(51) International Patent Classification (IPC):
**G01M 99/00** (2011.01)    **G01H 17/00** (2006.01)

(52) Cooperative Patent Classification (CPC):
**G01H 17/00; G01M 99/00**

(86) International application number:
**PCT/JP2024/018941**

(87) International publication number:
**WO 2024/242159 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.05.2023   JP 2023085171**

(71) Applicant: **JFE Steel Corporation
Tokyo, 100-0011 (JP)**

(72) Inventors:
• **MAEDA, Takafumi
Tokyo 100-0011 (JP)**
• **HIRATA, Takehide
Tokyo 100-0011 (JP)**
• **TAKADA, Motoki
Tokyo 100-0011 (JP)**
• **SATO, Ken
Tokyo 100-0011 (JP)**

(74) Representative: **Hoffmann Eitle
Patent- und Rechtsanwälte PartmbB
Arabellastraße 30
81925 München (DE)**

(54) **ABNORMALITY DIAGNOSIS DEVICE AND ABNORMALITY DIAGNOSIS METHOD**

(57)    An abnormality diagnosis device according to the present invention includes: an operational signal collecting unit that collects a plurality of sensor signals; an in-operational-segment operational signal extracting unit that extracts a sensor signal for each predetermined operational segment of equipment from the plurality of sensor signals collected by the operational signal collecting unit; a signal level acquiring unit that acquires a signal level for each predetermined frequency band for each operational segment with respect to the sensor signal for each operational segment extracted by the in-operational-segment operational signal extracting unit; a degree-of-deviation calculating unit that calculates the degree of deviation of the signal level for each operational segment and each frequency band acquired by the signal level acquiring unit from the signal level of the same equipment, the same operational segment, and the same frequency band during normal operation; and an abnormal part specifying unit that specifies an abnormal part of the equipment on the basis of the degree of deviation calculated by the degree-of-deviation calculating unit.

FIG.1

**EP 4 700 355 A1**

**Description**

Field

The present invention relates to an abnormality diagnosis device and an abnormality diagnosis method for specifying an abnormal part of equipment using a plurality of different types of sensor signals during operation of the equipment.

Background

Patent Literature 1 describes a diagnostic device that performs diagnosis on a diagnosis target by comparing an observed waveform observed from the diagnosis target with a reference waveform. Patent Literature 2 describes a state estimation device that estimates a change in the state of equipment on the basis of a waveform and frequency information detected by a plurality of sensors provided in the equipment. Patent Literature 3 describes a diagnostic device that detects chattering of a rolling roll using the frequency of an acoustic signal detected by an acoustic sensor provided in a rolling mill.

Citation List

Patent Literature

Patent Literature 1: JP 2008-164490 A
Patent Literature 2: WO 2019/017345 A
Patent Literature 3: WO 2020/157818 A

Summary

Technical Problem

The techniques described in Patent Literatures 1 to 3 are techniques in which abnormality diagnosis by sound, abnormality detection of an electric signal, and abnormality detection by a vibration sensor are performed independently. However, in a case where an abnormality of equipment is detected, there are cases where a sensor capable of detecting an abnormality is limited depending on the type or the degree of the abnormality such as that abnormality detection using an AE sensor is effective for an initial abnormality such as a crack or a minute flaw of a bearing or that abnormality detection using a vibration sensor is effective for an abnormality such as wear or backlash.

The present invention has been made to solve the above problem, and an object thereof is to provide an abnormality diagnosis device and an abnormality diagnosis method capable of accurately specifying an abnormal part of equipment.

Solution to Problem

To solve the problem and achieve the object, an abnormality diagnosis device according to the present invention is the device that specifies an abnormal part of equipment using a plurality of sensor signals during operation of the equipment, the plurality of sensor signals detected using a plurality of different types of sensors. The abnormality diagnosis device includes: an operational signal collecting unit that collects the plurality of sensor signals; an in-operational-segment operational signal extracting unit that extracts a sensor signal for each of predetermined operational segments of the equipment from the plurality of sensor signals collected by the operational signal collecting unit; a signal level acquiring unit that acquires a signal level for each of predetermined frequency bands for each of the operational segments with respect to the sensor signal for each of the operational segments extracted by the in-operational-segment operational signal extracting unit; a degree-of-deviation calculating unit that calculates a degree of deviation of the signal level for each of the operational segments and each of the frequency bands acquired by the signal level acquiring unit from a signal level of the same equipment, a same operational segment, and a same frequency band during normal operation; and an abnormal part specifying unit that specifies an abnormal part of the equipment on a basis of the degree of deviation calculated by the degree-of-deviation calculating unit.

Moreover, the signal level acquiring unit may acquire the signal level by classifying each of sensor signals on a basis of predetermined operating conditions of the equipment, and the degree-of-deviation calculating unit may calculate the degree of deviation of the signal level for each of the operational segments, each of the frequency bands, and each of the operating conditions acquired by the signal level acquiring unit from a signal level of the same equipment, the same operational segment, the same frequency band, and a same operating condition during the normal operation.

Moreover, the abnormal part specifying unit may specify the abnormal part of the equipment on a basis of a pattern of deviations having a degree of deviation in each of the frequency bands obtained for each of the operational segments as an element.

Moreover, the abnormality diagnosis device may further include a database unit that stores: an extraction condition for collecting the plurality of sensor signals of the equipment; and data necessary for specifying the abnormal part of the equipment, wherein the abnormal part specifying unit may specify the abnormal part of the equipment by referring to a table that may be stored in the database unit, the table including information indicating a relationship between: the operational segments and the pattern of deviations; and abnormal parts of the equipment.

Moreover, the table may include information indicating a relationship between: the operational segments, the pattern of deviations, and operating conditions of the equipment; and abnormal parts of the equipment, and the abnormal part specifying unit may specify the abnormal part of the equipment in consideration of the operational segments, the pattern of deviations, and the operating conditions of the equipment by referring to the table.

Moreover, the abnormality diagnosis device may further include: a normal signal level acquiring unit that acquires a signal level for each of predetermined frequency bands for each of the operational segments with respect to the sensor signal for each of the operational segments extracted by the in-operational-segment operational signal extracting unit; and a normal distribution determining and recording unit that classifies the signal level acquired by the normal signal level acquiring unit for each of the equipment, each of the operational segments, and each of the frequency bands and records the classified signal level as a signal level during the normal operation of the equipment.

Moreover, the normal distribution determining and recording unit may record, for each of the equipment, a table including information indicating a relationship between: the pattern of deviations, the pattern of deviations having, as an element, a degree of deviation of a signal level from the signal level during the normal operation in each of the frequency bands obtained for each of the operational segments; and the abnormal parts of the equipment.

Moreover, the normal distribution determining and recording unit may record a table including information indicating a relationship between: the operational segments, the pattern of deviations, and the operating conditions of the equipment; and the abnormal parts of the equipment.

Moreover, the operational segments may be determined in association with operation time of the equipment or an operation position of a component device of the equipment.

Moreover, the operational segments may be determined, for a sensor signal installed in the equipment, the sensor signal being capable of identifying a change point of operation of the equipment, on a basis of confirmation of division positions by: designation of an assumed value of a number of divisions based on knowledge about operation of the equipment; and change point extraction by a machine learning method using data of the sensor signal or change point extraction by data classification by a clustering technique.

Moreover, an abnormality diagnosis method according to the present invention is the method that specifies an abnormal part of equipment using a plurality of sensor signals during operation of the equipment, the plurality of sensor signals detected using a plurality of different types of sensors. The abnormality diagnosis method includes: an operational signal collecting step of collecting the plurality of sensor signals; an in-operational-segment operational signal extracting step of extracting a sensor signal for each of predetermined operational segments of the equipment from the plurality of sensor signals collected in the operational signal collecting step; a signal level acquiring step of acquiring a signal level for each of predetermined frequency bands for each of the operational segments with respect to the sensor signal for each of the operational segments extracted in the in-operational-segment operational signal extracting step; a degree-of-deviation calculating step of calculating a degree of deviation of the signal level for each of the operational segments and each of the frequency bands acquired in the signal level acquiring step from a signal level of the same equipment, a same operational segment, and a same frequency band during normal operation; and an abnormal part specifying step of specifying an abnormal part of the equipment on a basis of the degree of deviation calculated in the degree-of-deviation calculating step.

Moreover, the abnormality diagnosis method may further include: a normal signal level acquiring step of acquiring a signal level for each of predetermined frequency bands for each of the operational segments with respect to the sensor signal for each of the operational segments extracted in the in-operational-segment operational signal extracting step; and a normal distribution determining and recording step of classifying the signal level acquired in the normal signal level acquiring step for each of the equipment, each of the operational segments, and each of the frequency bands and recording the classified signal level as a signal level during the normal operation of the equipment.

Moreover, the plurality of different types of sensors may include an acoustic sensor, a vibration sensor, and an AE sensor.

Advantageous Effects of Invention

According to an abnormality diagnosis device and an acoustic diagnosis method according to the present invention, dispersion of a plurality of different types of sensor signals is evaluated, and an abnormal part of equipment is specified on the basis of an abnormality level for each operational segment and each frequency band of the equipment, and thus the abnormal part of the equipment can be accurately specified.

Brief Description of Drawings

FIG. 1 is a block diagram illustrating the configuration of an abnormality diagnosis device as an embodiment of the present invention.
FIG. 2 is a flowchart illustrating the flow of data recording processing as an embodiment of the present invention.
FIG. 3 is a diagram for describing data recording processing according to an embodiment of the present invention.
FIG. 4 is a diagram for explaining a sound pressure signal extraction method in a case where sound pressure signal extraction conditions are specified using a crank angle.
FIG. 5 is a graph illustrating an example of the change in the sound pressure level of operational sounds in one frequency band with respect to the crank angle.
FIG. 6 is a diagram illustrating a classification example of operational sounds illustrated in FIG. 5.
FIG. 7 is a flowchart illustrating the flow of abnormal part specifying processing as an embodiment of the present invention.
FIG. 8 is a diagram for explaining a specific example of abnormal part specifying processing according to an embodiment of the present invention.
FIG. 9 is a diagram illustrating frequency distributions of the sound pressure level in a case where operating conditions of press equipment are limited and a case where the operating conditions are not limited.
FIG. 10 is a diagram illustrating a frequency distribution of an AE wave.
FIG. 11 is a diagram for explaining abnormal part specifying processing of an example.

Description of Embodiments

Hereinafter, an abnormality diagnosis device and an abnormality diagnosis method as embodiments of the present invention will be described with reference to the drawings.

[Configuration]

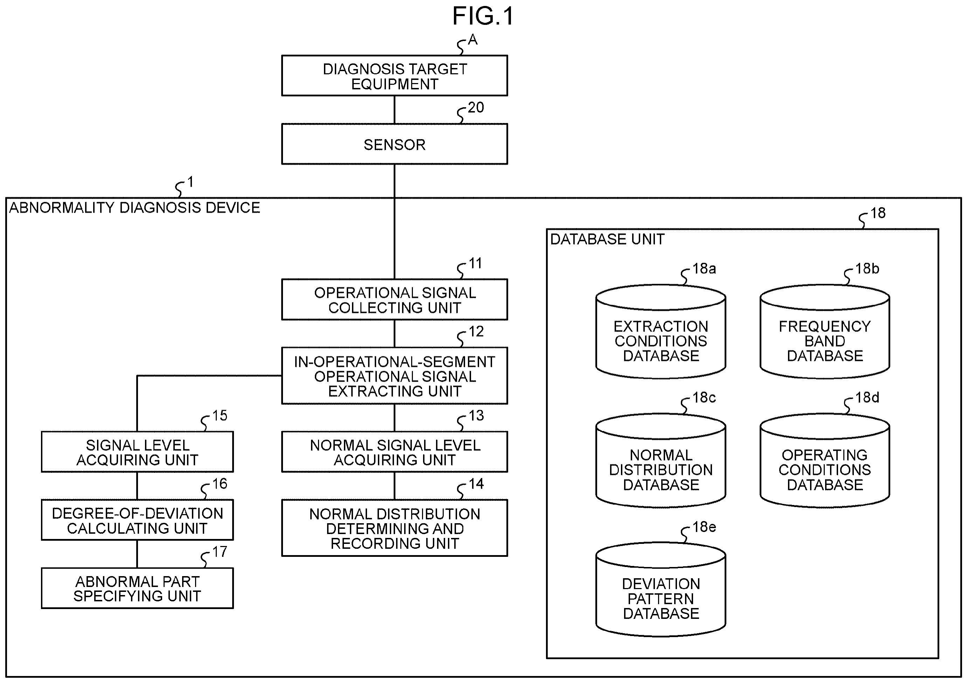

FIG. 1 is a block diagram illustrating the configuration of an abnormality diagnosis device as an embodiment of the present invention. As illustrated in FIG. 1, an abnormality diagnosis device 1 as an embodiment of the present invention is a device that specifies an abnormal part of one or more pieces of diagnosis target equipment (hereinafter, abbreviated as equipment) A determined in advance using a sensor signal at the time of operation of the equipment A, and includes an information processing device such as a computer. Note that the equipment A includes a plurality of components, and examples of such equipment include steel manufacturing equipment such as press equipment and rolling equipment.
The abnormality diagnosis device 1 includes an operational signal collecting unit 11, an in-operational-segment operational signal extracting unit 12, a normal signal level acquiring unit 13, a normal distribution determining and recording unit 14, a signal level acquiring unit 15, a degree-of-deviation calculating unit 16, an abnormal part specifying unit 17, and a database unit 18. The operational signal collecting unit 11, the in-operational-segment operational signal extracting unit 12, the normal signal level acquiring unit 13, the normal distribution determining and recording unit 14, the signal level acquiring unit 15, the degree-of-deviation calculating unit 16, and the abnormal part specifying unit 17 are functional blocks implemented by an arithmetic processing device such as a CPU inside the information processing device executing a computer program. The function of each of the units will be described later.
The database unit 18 includes a storage device such as an HDD included in the information processing device, and includes an extraction conditions database 18a, a frequency band database 18b, a normal distribution database 18c, an operating conditions database 18d, and a deviation pattern database 18e. Details of each of the databases will be described later. Note that the database unit 18 may be disposed outside the abnormality diagnosis device 1, and the abnormality diagnosis device 1 may acquire data from the database unit 18 via an electric communication line.
The abnormality diagnosis device 1 having such a configuration specifies an abnormal part of the equipment A by executing data recording processing and abnormal part specifying processing described below. Hereinafter, the operation of the abnormality diagnosis device 1 when executing the data recording processing and the abnormal part specifying processing will be described.

[Data Recording Processing]

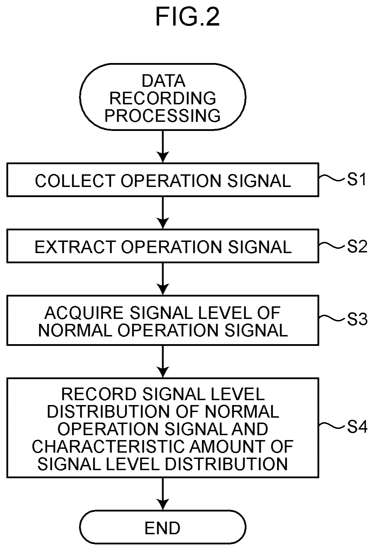

FIG. 2 is a flowchart illustrating the flow of data recording processing as an embodiment of the present invention. The flowchart illustrated in FIG. 2 starts at the timing when an execution command of the data recording processing is input to the abnormality diagnosis device 1, and the data recording processing proceeds to processing of step S1.

In the processing of step S1, the operational signal collecting unit 11 collects a plurality of sensor signals (operation signals) of the equipment A within a predetermined period during normal operation including k types ($k \geq 1$) of operational segments of the equipment A having been classified in advance using a plurality of different types of sensors 20 installed in the vicinity of the equipment A at predetermined time intervals. Examples of the plurality of different types of sensors 20 include an acoustic sensor, a vibration sensor, and an acoustic emission (AE) sensor. As a result, the processing of step S1 is completed, and the data recording processing proceeds to processing of step S2.

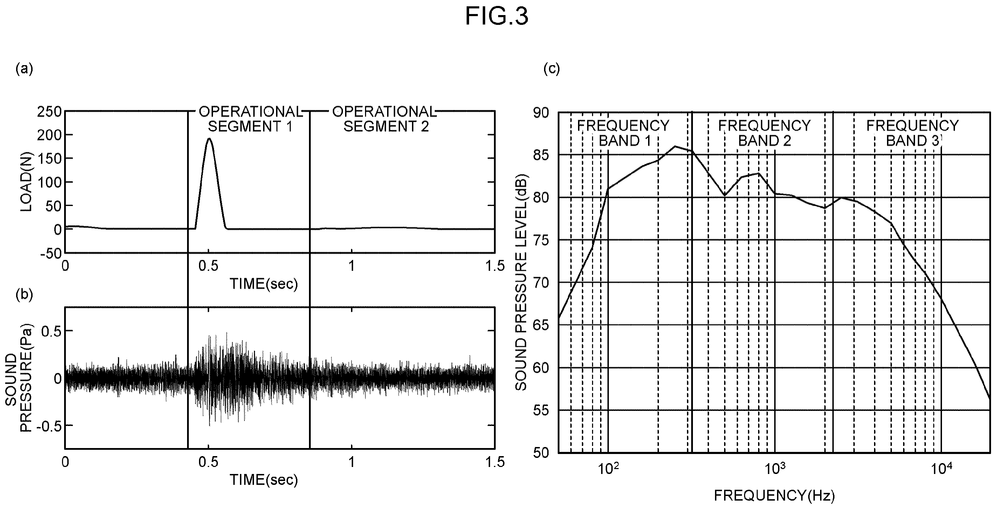

In the processing of step S2, the in-operational-segment operational signal extracting unit 12 extracts the sensor signal for each of the k types of operational segments from the plurality of sensor signals collected in the processing of step S1. Specifically, the in-operational-segment operational signal extracting unit 12 reads extraction conditions (extraction start time, extraction end time, and the like) of the sensor signal for each of the k types of operational segments from the extraction conditions database 18a. For example, in an example illustrated in FIG. 3(a), the in-operational-segment operational signal extracting unit 12 reads, as extraction conditions, information regarding start time and end time of an operational segment 1 in which the load rises and returns to a predetermined value and start time and end time of an operational segment 2 during which the load is maintained at the predetermined value. Then, the in-operational-segment operational signal extracting unit 12 extracts the sensor signal satisfying the extraction conditions from the sensor signal collected in the processing of step S1, thereby extracting the sensor signal for each of the k types of operational segments. For example, in the example illustrated in FIG. 3(b), the in-operational-segment operational signal extracting unit 12 extracts a sound pressure signal satisfying the extraction conditions from a sound pressure signal collected using an acoustic sensor in the processing of step S1, thereby extracting the sound pressure signal for each of the k types of operational segments.

The extraction conditions of the sensor signal are not limited to the specification method using the start time and the end time of the operational segment and may be specified on the basis of the operation position of the target equipment. For example, in the case of press equipment for working a workpiece by pressing a mold against the workpiece using a crank mechanism, the operational segment of the press equipment can be specified by the size of the crank angle in contact with the workpiece. Specifically, let a crank angle when the workpiece first comes into contact with the mold be $\alpha$ and a crank angle when the workpiece is separated from the mold be $\beta$, the press operational segment can be specified by the crank angles $\alpha$ and $\beta$. In addition, in a case where there is processing after the press operation (for example, the operation of a conveyor or the like), the operational segment of processing after the pressing can be specified by using a crank angle larger than the crank angle $\beta$. Therefore, in this case, the extraction conditions of the sensor signal can be specified using the crank angle. In a case where the extraction conditions of the sensor signal are specified on the basis of the operation position of the target equipment, information associating the extraction conditions with the operation position of the equipment may be recorded and stored in the extraction conditions database 18a to cope with the specification.

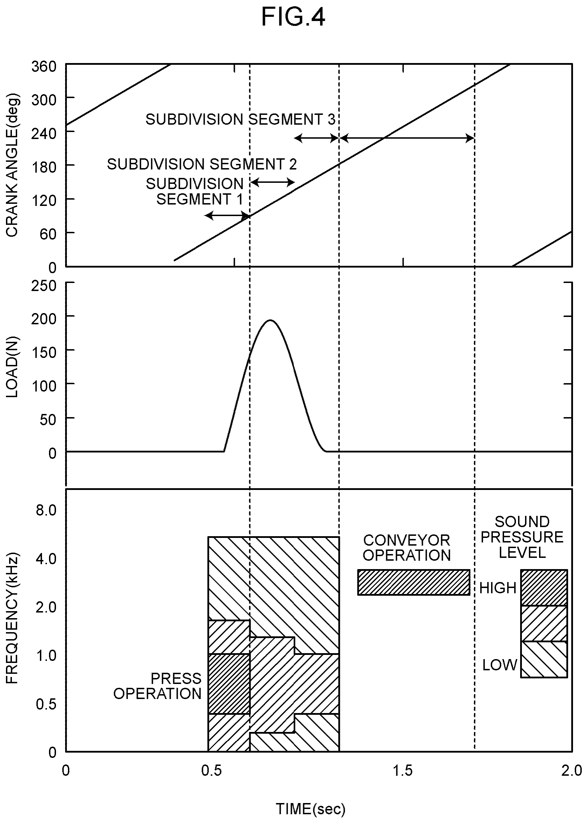

FIG. 4 is a diagram for explaining a sound pressure signal extraction method in a case where extraction conditions of a sound pressure signal of an acoustic sensor as the sensor signal are specified using the crank angle. The crank angle $\alpha$ when the workpiece first comes into contact with the mold can be derived from the geometric relationship between the workpiece and the crank mechanism. In an example illustrated in FIG. 4, a press operational segment in which a press load is applied to the workpiece is divided into a plurality of segments (subdivision segments 1 to 3), and the sound pressure signal is extracted in each of the subdivision segments. When the sound pressure signal is extracted, since the crank angle uniquely corresponds to the start time and the end time of each of the subdivision segments, it suffices to extract the sound pressure signal within the range of the crank angle.

As described above, the time and the operation position for specifying the operational segment can be determined in consideration of the relationship between the product manufacturing processes for each piece of equipment and the operation of the equipment; however, it is not easy to specify a segment in which characteristic sound can be effectively extracted by the time or the operation position. In such a case, the operational segment may be specified using information regarding a change point of a sensor signal indicating a change in the equipment operation. For example, in the case of the above-described press equipment, since the start timing and the like of the press operation can be detected by the change in the load of the press load, a subdivision segment may be specified using a load cell signal for detecting the press load. Specifically, in the example illustrated in FIG. 4, the load signal indicates the change in the load cell signal, and it is possible to specify subdivision segments including a segment in which the load signal is maximized in addition to each of the rising and falling positions of the load signal. As described above, the position of each operational segment can be specified in association with the operation position such as the time or the crank angle and the change point of the sensor signal of a load cell or the like indicating a change in the equipment operation as described above.

In addition, the operational segment can also be specified by using a classification technique based on a combination of the knowledge related to the equipment operation and data of the generation position of a physical change observed by a sensor signal associated with the equipment operation (for example, the operational sound acquired by an acoustic sensor). There is a case where a plurality of operational sounds are generated even in one equipment operation, and even in such a case, the diagnosis accuracy can be improved by classifying the generation pattern of the operational sounds associated with the equipment operation. For example, in the case of press equipment, an operation from pressing a workpiece with a mold to returning is defined as one equipment operation; however, the operational sound can be classified by subdividing the occurrence position of the operational sound of the process by the crank angle or the like. Specifically, an operational segment can be specified as follows on the basis of prior knowledge of the press operation.

(1) Segment in which the workpiece is conveyed: Operational sound is generated by the conveyor.
(2) Segment in which the workpiece and a mold come into contact with each other: Operational sound is generated by friction or impact vibration when the workpiece and the mold come into contact with each other. The operational sound is a sound in which the workpiece and the mold come into contact with each other.
(3) Segment in which the workpiece and the mold are separated: Operational sound is generated by operation or vibration when the crank mechanism moves. The operational sound corresponds to vibration or friction sound when the crank mechanism or the mold moves.

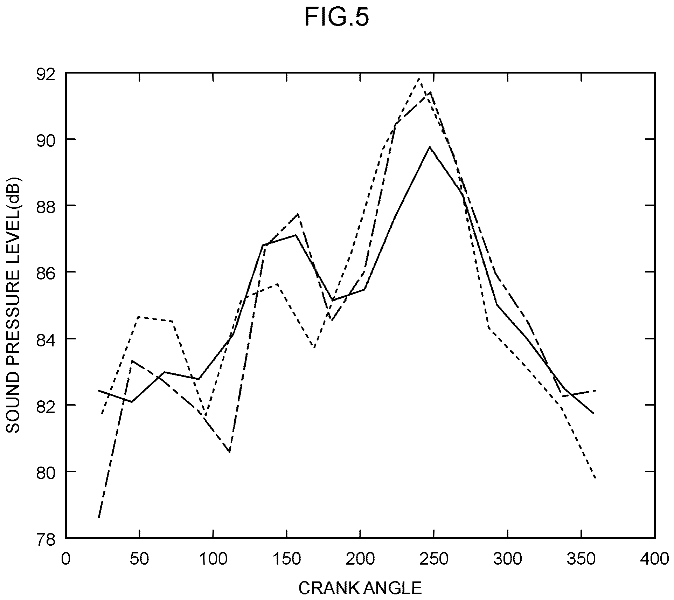

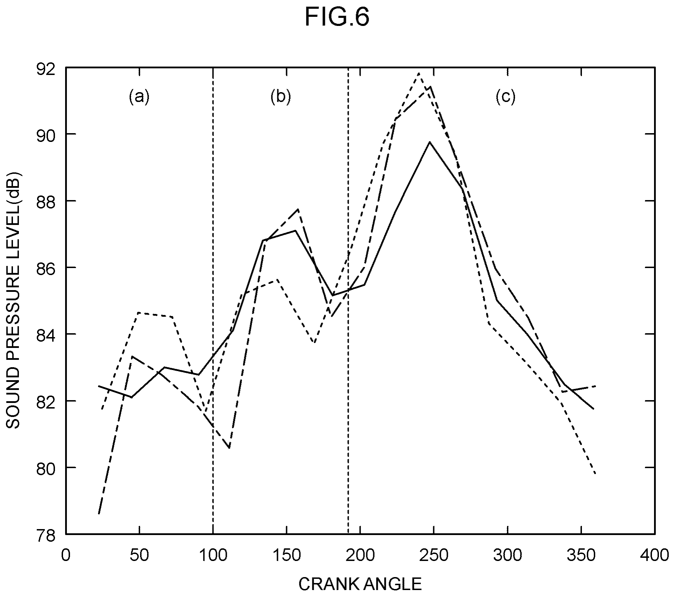

Although there is a possibility that the frequency of the operational sound is different in each of the above segments, since a period in which the workpiece is pressed is included, a large difference occurs in the sound pressure level of the operational sound. Therefore, it is desirable to divide the operational segments by focusing on the sound pressure level. FIG. 5 is a graph illustrating an example of the change in the sound pressure level of operational sounds in one frequency band with respect to the crank angle. FIG. 5 illustrates the change in the sound pressure level in three press operations. As illustrated in FIG. 5, peaks of the sound pressure level can be confirmed around crank angles of 50°, 150°, and 250°. Therefore, since a valley between peaks indicates a change point of the operational sound, the operational sound is divided into three operational sounds in the example illustrated in FIG. 5. A change point of the operational sound can be obtained from the data, and a machine learning method can be used for change point detection. In addition, as a method of classifying operational sounds, for example, a K-means algorithm can be used. The K-means algorithm is a method of classifying data into a plurality of predetermined clusters. In the example illustrated in FIG. 5, since there are three change points of the operational sound, an example in which the operational sound is classified into three is illustrated in FIGS. 6(a) to 6(c).

In this manner, when the operational sounds are classified, the number of divisions of the equipment operation is presumed in consideration of the equipment mechanism on the basis of the prior knowledge, the change points of the sound pressure data are calculated on the basis of the number of divisions presumed using the machine learning method or the clustering method, and the division positions are confirmed on the basis of the calculated change points. Note that data capable of expressing the characteristic of the operation or the change point information such as the load data (the above-described load cell data) may be used when division positions are determined in addition to the sound pressure data. Furthermore, in the above description, accurate segments of the operational segment are obtained by focusing on the sound pressure level of the specific frequency band; however, the final operational segments may be determined by performing similar processing for each of several candidates for the frequency band of interest. Furthermore, an example has been described above in which the sound pressure level signal of the acoustic sensor is used as the sensor signal. However, similar processing can be performed also with a signal of an AE sensor or a vibration sensor.

As described above, operational segments having different characteristics can be accurately divided on the basis of a sensor signal that can identify a change point of the equipment operation (in the press equipment, a sensor signal such as the press load signal or the sound pressure level of the acoustic signal) among sensor signals installed in the target equipment or around the target equipment. Conditions obtained by dividing the operational segment determined in this manner by the time period since the start of the equipment and the operation position of the equipment (for example, the crank angle of the press equipment) may be registered in the extraction conditions database 18a in advance as extraction conditions. As a result, the processing of step S2 is completed, and the data recording processing proceeds to processing of step S3.

In the processing of step S3, first, the normal signal level acquiring unit 13 converts the sensor signal for each operational segment extracted in the processing of step S2 into a signal level with respect to the frequency using Fourier transform, an octave band filter, or the like. Next, the normal signal level acquiring unit 13 reads, from the frequency band database 18b, information regarding $l$ types ($l \geq 1$) of frequency bands (minimum value, maximum value, and the like of the frequency) to be used for abnormality detection predetermined for each operational segment. Then, the normal signal level acquiring unit 13 acquires the signal level (signal level of the normal operation signal) for each of the $l$ types of frequency bands from the data of the converted signal level using a bandpass filter or the like. For example, in the example illustrated in FIG. 3(c), the normal signal level acquiring unit 13 acquires the sound pressure level of the normal operational sound for each of predetermined frequency bands 1 to 3. As a result, the processing of step S3 is completed, and the data recording processing proceeds to processing of step S4.

In the processing of step S4, the normal distribution determining and recording unit 14 classifies the signal level of the normal operation signal acquired in the processing of step S3 for each operational segment and each frequency band and records the data of the signal level distribution of the normal operation signal and the characteristic amount thereof (such as the average value, standard deviation, or the like) in the normal distribution database 18c. In addition, the normal distribution determining and recording unit 14 may further classify the signal level of a normal operation signal for each operating condition in consideration of a plurality of operating conditions (for example, m types of operating conditions). As a result, the processing of step S4 is completed, and the series of data recording processing ends.

In the data recording processing, in addition to the data recording processing of the normal operational sound and the like, a data table in which the relationship between a deviation pattern from the normal time and an abnormal part described later is organized is stored in the deviation pattern database 18e in advance. Regarding the deviation pattern and the registered content thereof, the degree of deviation is defined in the following "abnormal part specifying processing", and the description will be added thereafter.

[Abnormal Part Specifying Processing]

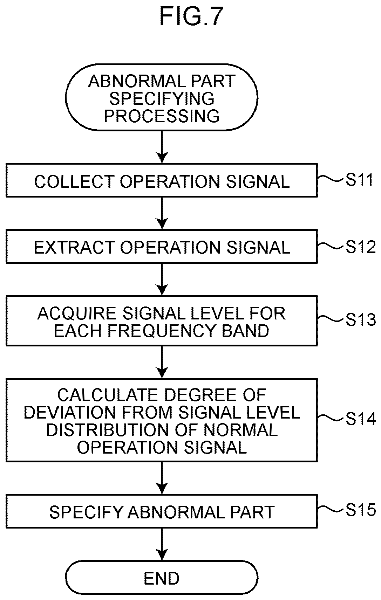

FIG. 7 is a flowchart illustrating the flow of abnormal part specifying processing as an embodiment of the present invention. The flowchart illustrated in FIG. 7 starts at the timing when an execution command of the abnormal part specifying processing is input to the abnormality diagnosis device 1, whereby the abnormal part specifying processing proceeds to processing of step S11.

In the processing of step S11, the operational signal collecting unit 11 collects, at predetermined time intervals, a plurality of sensor signals (operation signals) of the equipment A within a predetermined period including k types ($k \geq 1$) of operational segments of the equipment A having been classified in advance using a plurality of different types of sensors 20 installed in the vicinity of the equipment A. As a result, the processing of step S11 is completed, and the abnormal part specifying processing proceeds to processing of step S12.

In the processing of step S12, the in-operational-segment operational signal extracting unit 12 extracts the sensor signal for each of the k types of operational segments from the plurality of sensor signals collected in the processing of step S11. Since the flow of the processing of step S12 is the same as the flow of the processing of step S2 described above, a detailed description thereof will be omitted. As a result, the processing of step S12 is completed, and the abnormal part specifying processing proceeds to processing of step S13.

In the processing of step S13, the signal level acquiring unit 15 acquires the signal level for each of the k types of operational segments and each of the l types of frequency bands from the sensor signal extracted in the processing of step S12. Since the flow of the processing of step S13 is the same as the flow of the processing of step S3 described above, a detailed description thereof will be omitted. Note that the signal level acquiring unit 15 may read information regarding m types of operating conditions that affect the operation of the equipment A from the operating conditions database 18d and acquire the signal level for each of the k types of operational segments, each of the l types of frequency bands, and for each of the m types of operating conditions. As a result, the processing of step S13 is completed, and the abnormal part specifying processing proceeds to processing of step S14.

In the processing of step S14, the degree-of-deviation calculating unit 16 reads information regarding the signal level distribution during normal operation and the characteristic amount thereof from the normal distribution database 18c for each of the k types of operational segments of the equipment A and each of the l types of frequency bands. Next, using the read information, the degree-of-deviation calculating unit 16 calculates two or more degrees of deviation of the signal level acquired in the processing of step S13 with respect to the signal level during the normal operation for each of the k types of operational segments and each of the l types of frequency bands. Then, the degree-of-deviation calculating unit 16 determines whether the equipment A is normal (0) or abnormal (1) using the calculated degrees of deviation for each of the degrees of deviation and generates an array pattern vector of the determination result (0 or 1) for each of the l types of frequency bands in each operational segment as a deviation pattern.

The degree of deviation can be calculated by, for example, the following Equation (1). Note that the sensor signal level measurement value in a target operational segment in a target frequency band may be a statistical value such as an average value of measurement values in the operational segment. In a case where the degree of deviation exceeds a predetermined threshold value after the calculation of the degrees of deviation, it is determined as being abnormal (1), and in other cases, it is determined as being normal (0). The threshold value may be determined on the basis of, for example, $3\sigma$ or the like that is about three times the standard deviation $\sigma$; however, the threshold value is not limited thereto and may be determined with adjustment along with observation of the characteristics of the operational data.

$$\text{Degree of Deviation} =$$

$$\frac{\begin{array}{c}\text{(Sound Pressure Level Measurement Value in}\\ \text{Target Operational Segment in Target Frequency Band} -\\ \text{Sound Pressure Level Average Value during Normal Operation in}\\ \text{Target Operational Segment in Target Frequency Band)}\end{array}}{\begin{array}{c}\text{Sound Pressure Level Standard Deviation during Normal Operation in}\\ \text{Target Operational Segment in Target Frequency Band}\end{array}}$$

$$\cdots (1)$$

In a case where the m types of operating conditions are taken into consideration in the processing of step S13, the degree-of-deviation calculating unit 16 calculates the degree of deviation with reference to a data table as illustrated in Table 1 below. The data table shown in Table 1 below indicates information regarding the sound pressure level distribution during normal operation and the characteristic amount thereof for each of the k types of operational segments, each of the l types of frequency bands, and each of the m types of operating conditions. The data table illustrated in Table 1 below corresponds to the content of the extraction conditions database 18a, the frequency band database 18b, the normal distribution database 18c, and the operating conditions database 18d. The data table illustrated in Table 1 is for a case where the sensor signal is a sound pressure signal collected using an acoustic sensor, and a similar data table is prepared for each type of sensor. As a result, the processing of step S14 is completed, and the abnormal part specifying processing proceeds to processing of step S15.

(Table 1)

| Operational Segment | | Frequency Band | | Operating Conditions | | | Sound Pressure Level Distribution of Associated Normal Operational Sound | |
|---|---|---|---|---|---|---|---|---|
| Segment Number | Operational Segment | Frequency Number | Frequency Band | Condition Number | Steel Type | Amount of Pressure Decrease | Average Value | Standard Deviation |
| 1 | For $t_1$ Seconds during Pressure Decrease | 1 | $f_{11}$ TO $f_{12}$Hz | 1 | A | $S_{11}$ TO $S_{12}$ | $\overline{x}1$ | $\sigma 1$ |
| 1 | For $t_1$ Seconds during Pressure Decrease | 1 | $f_{11}$ TO $f_{12}$Hz | 2 | A | $S_{12}$ TO $S_{13}$ | $\overline{x}2$ | $\sigma 2$ |
| 1 | For $t_1$ Seconds during Pressure Decrease | 1 | $f_{11}$ TO $f_{12}$Hz | 3 | A | $S_{13}$ TO $S_{14}$ | $\overline{x}3$ | $\sigma 3$ |
| 1 | … | 1 | … | … | … | … | … | … |
| 1 | … | 1 | … | m | … | … | $\overline{x}m$ | $\sigma m$ |
| 1 | … | … | … | … | … | … | … | … |
| 1 | … | $\ell$ | $f_{\ell 1}$ TO $f_{\ell 2}$Hz | 1 | A | $S_{11}$ TO $S_{12}$ | $\overline{x}1$ | $\sigma 1$ |
| 1 | … | $\ell$ | $f_{\ell 1}$ TO $f_{\ell 2}$Hz | 2 | A | $S_{12}$ TO $S_{13}$ | $\overline{x}2$ | $\sigma 2$ |
| 1 | … | $\ell$ | $f_{\ell 1}$ TO $f_{\ell 2}$Hz | 3 | A | $S_{13}$ TO $S_{14}$ | $\overline{x}3$ | $\sigma 3$ |
| 1 | … | $\ell$ | … | … | … | … | … | … |

(continued)

| Operational Segment | | Frequency Band | | Operating Conditions | | | Sound Pressure Level Distribution of Associated Normal Operational Sound | |
|---|---|---|---|---|---|---|---|---|
| Segment Number | Operational Segment | Frequency Number | Frequency Band | Condition Number | Steel Type | Amount of Pressure Decrease | Average Value | Standard Deviation |
| 1 | … | $\ell$ | … | m | … | … | $\overline{x}m$ | $\sigma\, m$ |
| … | … | … | … | … | … | … | … | … |
| k | For $t_k$ Seconds during Rotation Of Crank | Q | $f_{\ell 1}$ TO $f_{\ell 2}$Hz | 1 | A | $S_{11}$ TO $S_{12}$ | $\overline{x}1$ | $\sigma\, 1$ |
| k | For $t_k$ Seconds during Rotation Of Crank | Q | $f_{\ell 1}$ TO $f_{\ell 2}$Hz | 2 | A | $S_{12}$ TO $S_{13}$ | $\overline{x}2$ | $\sigma\, 2$ |
| k | For $t_k$ Seconds during Rotation Of Crank | Q | $f_{\ell 1}$ TO $f_{\ell 2}$Hz | 3 | A | $S_{13}$ TO $S_{14}$ | $\overline{x}3$ | $\sigma 3$ |
| k | For $t_k$ Seconds during Rotation Of Crank | Q | … | … | … | … | … | … |
| k | For $t_k$ Seconds during Rotation Of Crank | Q | … | m | … | … | $\overline{x}m$ | $\sigma\, m$ |

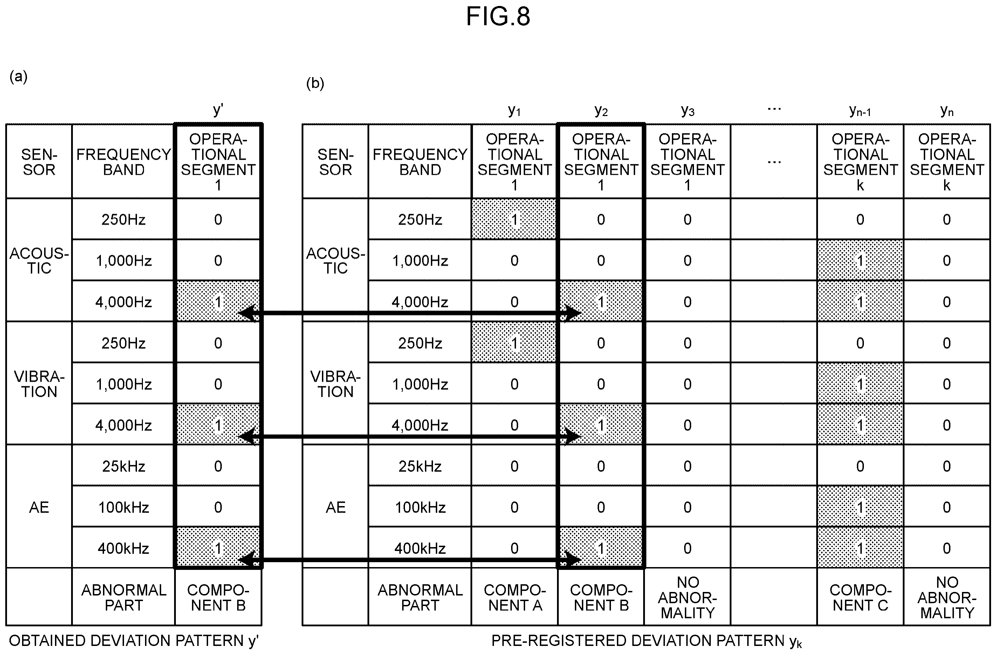

In the processing of step S15, the abnormal part specifying unit 17 specifies an abnormal part of the equipment A on the basis of the deviation pattern y' generated in the processing of step S14. Specifically, as illustrated in FIGS. 8(a) and 8(b), the abnormal part specifying unit 17 searches for a deviation pattern $y_k$ similar to the deviation pattern y' from operational segments registered in advance in the deviation pattern database 18e and a data table indicating the relationship between the deviation pattern $y_k$ and an abnormal part of the equipment A. The data table illustrated in FIG. 8(b) records the deviation pattern obtained when an abnormality of the equipment occurs, and is organized in association with the abnormal part. This data table is created in advance and stored in the deviation pattern database 18e by the normal distribution determining and recording unit 14. In addition, the data table can be structured to specify an abnormal part on the basis of deviation patterns in consideration of m types of operating conditions in addition to the classification for each of the k types of operational segments and each of the l types of frequency bands. Therefore, the abnormal part specifying unit 17 may specify an abnormal part of the equipment A further in consideration of the m types of operating conditions.

Note that the abnormal part specifying unit 17 desirably calculates the degree of similarity of the deviation pattern y' to the deviation pattern $y_k$ using the Euclidean distance as expressed in the following Equation (2) and searches for the similar deviation pattern $y_k$ on the basis of the calculated similarity. The value of the degree of similarity expressed by Equation (2) approaches 1 as the deviation pattern y' is more similar to the deviation pattern $y_k$. Then, the abnormal part specifying unit 17 reads information regarding an abnormal part of the equipment A corresponding to the searched deviation pattern $y_x$. For example, in the example illustrated in FIGS. 8(a) and 8(b), since the deviation pattern y' generated in the processing of step S14 coincides with a deviation pattern $y_2$, the abnormal part specifying unit 17 specifies a component B corresponding to the deviation pattern $y_2$ as an abnormal part of the equipment A. As a result, the processing of step S15 is completed, and the series of abnormal part specifying processing ends.

$$\text{Degree of Similarity} = \frac{1}{1 + |y' - y_k|} \qquad \cdots (2)$$

As is clear from the above description, the abnormality diagnosis device 1 according to the embodiment of the present invention includes: the operational signal collecting unit 11 that collects a plurality of sensor signals of the equipment A; the in-operational-segment operational signal extracting unit 12 that extracts a sensor signal for each predetermined operational segment of the equipment A from the plurality of sensor signals collected by the operational signal collecting unit 11; the signal level acquiring unit 15 that acquires a signal level for each predetermined frequency band for each operational segment with respect to the sensor signal for each operational segment extracted by the in-operational-segment operational signal extracting unit 12; the degree-of-deviation calculating unit 16 that calculates the degree of deviation of the signal level for each operational segment and each frequency band acquired by the signal level acquiring unit 15 from the signal level of the same equipment, the same operational segment, and the same frequency band during normal operation; and the abnormal part specifying unit 17 that specifies an abnormal part of the equipment on the basis of the degree of deviation calculated by the degree-of-deviation calculating unit 16. According to such a configuration, dispersion of a plurality of different types of sensor signals is evaluated, and an abnormal part of equipment A is specified on the basis of the signal level for each operational segment and each frequency band of the equipment A, and thus the abnormal part of the equipment A can be accurately specified. In addition, this makes it possible to take measures such as quick adjustment and/or repair or replacement processing of the abnormal part, whereby it is possible to suppress deterioration in the quality and quality defects of the manufactured product. This can also contribute to improvement of the product yield.

The abnormality diagnosis device 1 according to an embodiment of the present invention further includes: the normal signal level acquiring unit 13 that acquires, for the sensor signal of each operational segment during normal operation of the equipment A extracted by the in-operational-segment operational signal extracting unit 12, a signal level for each predetermined frequency bands for the operational segment; and the normal distribution determining and recording unit 14 that classifies the signal level acquired by the normal signal level acquiring unit 13 for each piece of equipment, each operational segment, and each frequency band, records the classified signal level as the signal level during the normal operation of the equipment A, and records the table in which deviation patterns and abnormal parts are associated with each other for each operational segment and for each frequency bands, the deviation patterns and the abnormal parts obtained when abnormalities of the equipment A have occurred. According to such a configuration, the dispersion of a plurality of different types of sensor signals is evaluated, and with respect to the sensor signal level during the normal operation of the equipment A, the signal level for each piece of equipment, each operational segment, and each frequency band, as well as the table in which deviation patterns obtained when abnormalities have occurred and abnormal parts are associated with each other are recorded. As a result, even in a case where the signal level of the normal sensor signal is changed, the recording processing is newly performed on the normal signal level, an abnormal part of the equipment A is specified on the basis of the signal level for each operational segment and each frequency band with reference to the new operational signal level data during normal operation, and thus the abnormal part of the equipment A can be accurately specified.

In addition, since the abnormality diagnosis device 1 according to an embodiment of the present invention specifies an abnormal part of the equipment A also in consideration of the operating conditions of the equipment A, it is possible to accurately specify the abnormal part of the equipment A. That is, in general, in steel manufacturing equipment such as press equipment and rolling equipment, operating conditions such as the rolling amount and the material change even during normal operation, and accordingly, the magnitude and the frequency of the sensor signal vary. For this reason, the normal range of the magnitude and the frequency of the sensor signal is widened, and the magnitude and the frequency of the sensor signal are buried in the normal range. As a result, an abnormality of the equipment may not be accurately detected only by the magnitude or the frequency of the sensor signal. On the other hand, the abnormality diagnosis device 1 according to an embodiment of the present invention specifies an abnormal part of the equipment A also in consideration of the operating conditions of the equipment A, and thus it is possible to accurately specify the abnormal part of the equipment A. Examples

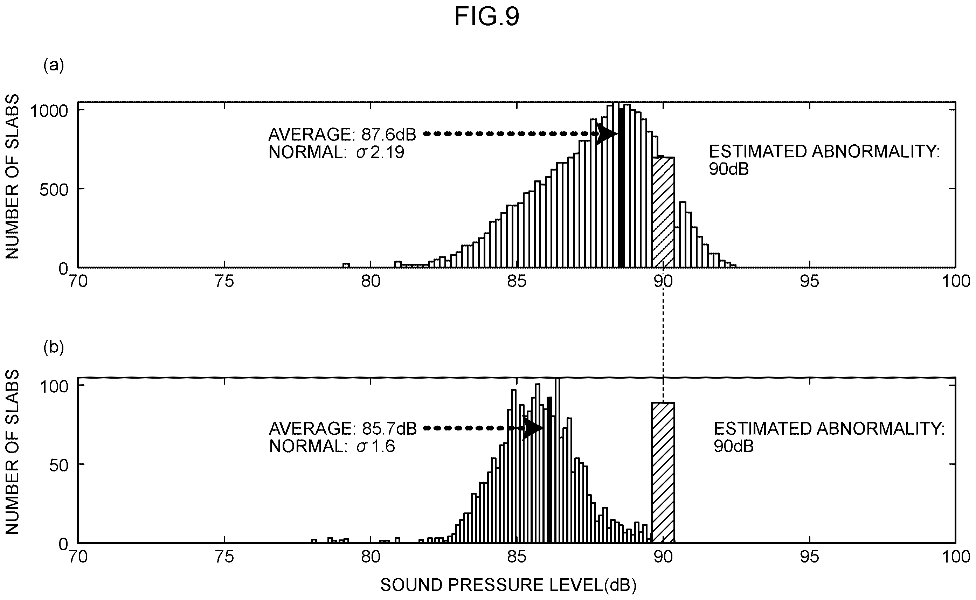

In the present example, an abnormal part of press equipment was specified. When an acoustic sensor is installed around the press equipment, a spectrum of impact sound can be acquired at the moment when a press load is generated, and operational sound of a conveyor can be acquired during operation of the conveyor after the press is completed. In the present example, the range of the frequency distribution of the sound pressure level during normal operation of the press equipment was narrowed by considering operating conditions of the press equipment, whereby an abnormal part of the press equipment was specified. FIG. 9(a) is a graph showing a frequency distribution (average value of 87.6 dB and standard deviation of $\sigma 2.19$) of the sound pressure level in a case where the operating conditions of the press equipment are limited, and FIG. 9(b) is a graph showing a frequency distribution (average value of 85.7 dB and standard deviation of $\sigma 1.6$) of the sound pressure level in a case where the operating conditions of the press equipment are not limited.

Next, the degree of deviation of the press equipment in a case where the sound pressure level was 91 dB was calculated assuming a mold abnormality. The degree of deviation of the press equipment was calculated using the following Equation (3). As a result, in the case where the operating conditions were not limited, the degree of deviation of the press equipment when the sound pressure level was 91 dB was calculated to be 1.5, and in the case where the operating conditions were limited, the degree of deviation of the press equipment when the sound pressure level was 91 dB was calculated to be 3.3. Therefore, setting the threshold value, of the degree of deviation for determining that an abnormality has occurred in the press equipment, to 3 makes it possible to accurately determine an abnormality in the press equipment.

$$\text{Degree of Deviation} = \frac{(\text{Monitoring Target Value} - \text{Normal Average Value})}{\text{Normal Standard Deviation}^2}$$

$$\cdots (3)$$

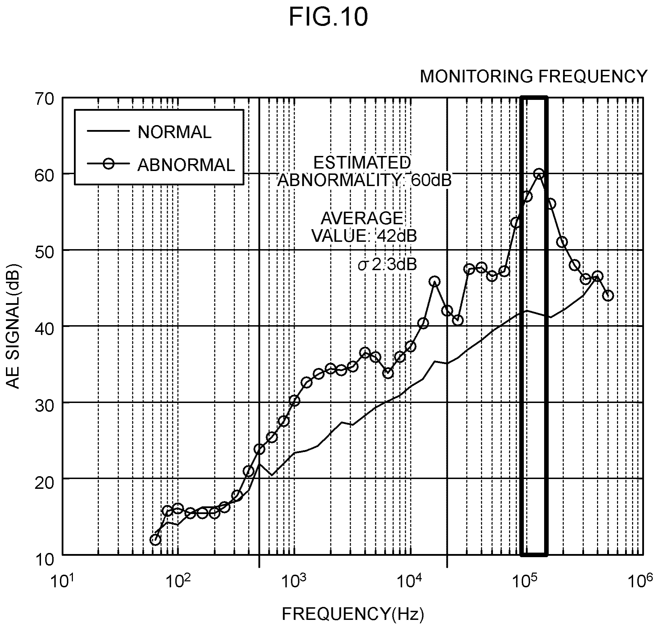

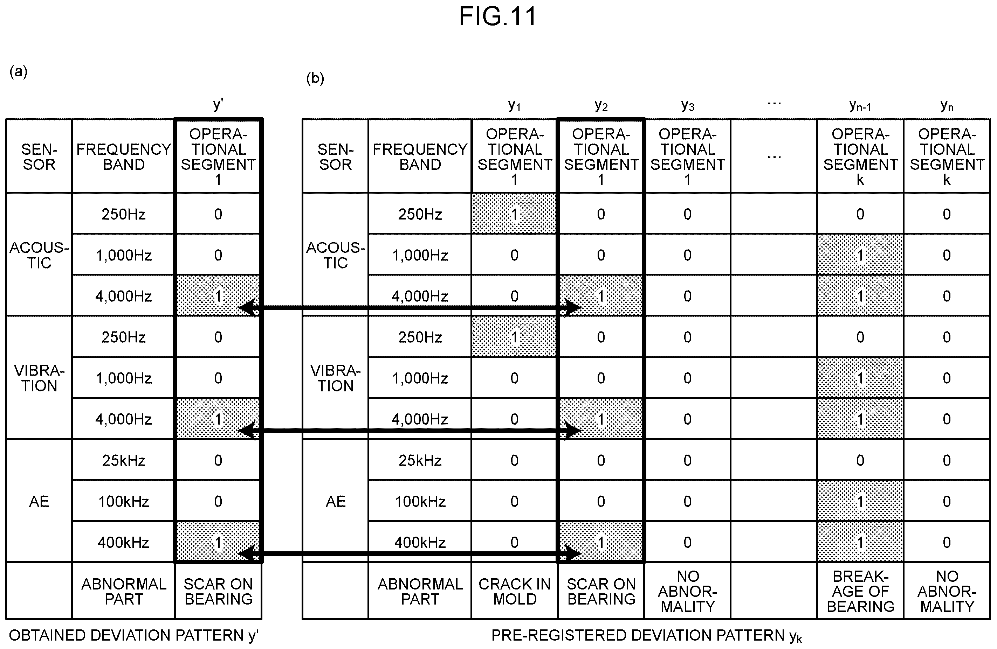

In addition, an AE sensor was installed in a bearing of the press equipment, and a frequency distribution of an AE wave obtained from the bearing was measured by limiting the operation range. The measurement results are shown in FIG. 10. Presuming a minute flaw of the bearing, an AE wave capable of detecting a minute flaw of the bearing was monitored in a high frequency band higher than or equal to 100 kHz. Calculating the degree of deviation of a case where a presumed abnormality is 60 dB using the above Equation (3), the degree of deviation is 8, which confirmed that there was a minute flaw in the bearing. In addition, as illustrated in FIG. 11, by searching for a deviation pattern similar to a deviation pattern calculated from the deviation pattern registered in advance, it was possible to accurately determine that the abnormal part of the equipment was the bearing.

Although the embodiments applied with the invention devised by the present inventors have been described above, the present invention is not limited by the description and the drawings included as a part of the disclosure of the present invention according to the embodiments. That is, other embodiments, examples, operation technology, and the like implemented by those skilled in the art on the basis of the present embodiments are all included in the scope of the invention.

Industrial Applicability

According to the present invention, it is possible to provide an abnormality diagnosis device and an abnormality diagnosis method capable of accurately specifying an abnormal part of equipment.

Reference Signs List

1       ABNORMALITY DIAGNOSIS DEVICE
11      OPERATIONAL SIGNAL COLLECTING UNIT
12      IN-OPERATIONAL-SEGMENT OPERATIONAL SIGNAL EXTRACTING UNIT
13      NORMAL SIGNAL LEVEL ACQUIRING UNIT
14      NORMAL DISTRIBUTION DETERMINING AND RECORDING UNIT
15      SIGNAL LEVEL ACQUIRING UNIT
16      DEGREE-OF-DEVIATION CALCULATING UNIT
17      ABNORMAL PART SPECIFYING UNIT
18      DATABASE UNIT
18a     EXTRACTION CONDITIONS DATABASE
18b     FREQUENCY BAND DATABASE
18c     NORMAL DISTRIBUTION DATABASE
18d     OPERATING CONDITIONS DATABASE
18e     DEVIATION PATTERN DATABASE
20      SENSOR
A       DIAGNOSIS TARGET EQUIPMENT

**Claims**

1. An abnormality diagnosis device that specifies an abnormal part of equipment using a plurality of sensor signals during operation of the equipment, the plurality of sensor signals detected using a plurality of different types of sensors, the abnormality diagnosis device comprising:

   an operational signal collecting unit that collects the plurality of sensor signals;
   an in-operational-segment operational signal extracting unit that extracts a sensor signal for each of predetermined operational segments of the equipment from the plurality of sensor signals collected by the operational signal collecting unit;
   a signal level acquiring unit that acquires a signal level for each of predetermined frequency bands for each of the operational segments with respect to the sensor signal for each of the operational segments extracted by the in-operational-segment operational signal extracting unit;
   a degree-of-deviation calculating unit that calculates a degree of deviation of the signal level for each of the operational segments and each of the frequency bands acquired by the signal level acquiring unit from a signal level of the same equipment, a same operational segment, and a same frequency band during normal operation; and
   an abnormal part specifying unit that specifies an abnormal part of the equipment on a basis of the degree of deviation calculated by the degree-of-deviation calculating unit.

2. The abnormality diagnosis device according to claim 1, wherein

   the signal level acquiring unit acquires the signal level by classifying each of sensor signals on a basis of predetermined operating conditions of the equipment, and
   the degree-of-deviation calculating unit calculates the degree of deviation of the signal level for each of the operational segments, each of the frequency bands, and each of the operating conditions acquired by the signal level acquiring unit from a signal level of the same equipment, the same operational segment, the same frequency band, and a same operating condition during the normal operation.

3. The abnormality diagnosis device according to claim 1 or 2, wherein the abnormal part specifying unit specifies the abnormal part of the equipment on a basis of a pattern of deviations having a degree of deviation in each of the frequency bands obtained for each of the operational segments as an element.

4. The abnormality diagnosis device according to claim 3, further comprising

   a database unit that stores:

   an extraction condition for collecting the plurality of sensor signals of the equipment; and
   data necessary for specifying the abnormal part of the equipment,

   wherein the abnormal part specifying unit specifies the abnormal part of the equipment by referring to a table stored in the database unit, the table including information indicating a relationship between:

   the operational segments and the pattern of deviations; and
   abnormal parts of the equipment.

5. The abnormality diagnosis device according to claim 4, wherein

   the table includes information indicating a relationship between:

   the operational segments, the pattern of deviations, and operating conditions of the equipment; and
   abnormal parts of the equipment, and

   the abnormal part specifying unit specifies the abnormal part of the equipment in consideration of the operational segments, the pattern of deviations, and the operating conditions of the equipment by referring to the table.

6. The abnormality diagnosis device according to any one of claims 1 to 5, further comprising:

a normal signal level acquiring unit that acquires a signal level for each of predetermined frequency bands for each of the operational segments with respect to the sensor signal for each of the operational segments extracted by the in-operational-segment operational signal extracting unit; and

a normal distribution determining and recording unit that classifies the signal level acquired by the normal signal level acquiring unit for each of the equipment, each of the operational segments, and each of the frequency bands and records the classified signal level as a signal level during the normal operation of the equipment.

7. The abnormality diagnosis device according to claim 6, wherein the normal distribution determining and recording unit records, for each of the equipment, a table including information indicating a relationship between:

the pattern of deviations, the pattern of deviations having, as an element, a degree of deviation of a signal level from the signal level during the normal operation in each of the frequency bands obtained for each of the operational segments; and
the abnormal parts of the equipment.

8. The abnormality diagnosis device according to claim 7, wherein the normal distribution determining and recording unit records a table including information indicating a relationship between:

the operational segments, the pattern of deviations, and the operating conditions of the equipment; and
the abnormal parts of the equipment.

9. The abnormality diagnosis device according to any one of claims 1 to 8, wherein the operational segments are determined in association with operation time of the equipment or an operation position of a component device of the equipment.

10. The abnormality diagnosis device according to any one of claims 1 to 8, wherein the operational segments are determined, for a sensor signal installed in the equipment, the sensor signal being capable of identifying a change point of operation of the equipment, on a basis of confirmation of division positions by:

designation of an assumed value of a number of divisions based on knowledge about operation of the equipment; and
change point extraction by a machine learning method using data of the sensor signal or change point extraction by data classification by a clustering technique.

11. The abnormality diagnosis device according to any one of claims 1 to 10, wherein the plurality of different types of sensors include an acoustic sensor, a vibration sensor, and an AE sensor.

12. An abnormality diagnosis method that specifies an abnormal part of equipment using a plurality of sensor signals during operation of the equipment, the plurality of sensor signals detected using a plurality of different types of sensors, the abnormality diagnosis method comprising:

an operational signal collecting step of collecting the plurality of sensor signals;
an in-operational-segment operational signal extracting step of extracting a sensor signal for each of predetermined operational segments of the equipment from the plurality of sensor signals collected in the operational signal collecting step;
a signal level acquiring step of acquiring a signal level for each of predetermined frequency bands for each of the operational segments with respect to the sensor signal for each of the operational segments extracted in the in-operational-segment operational signal extracting step;
a degree-of-deviation calculating step of calculating a degree of deviation of the signal level for each of the operational segments and each of the frequency bands acquired in the signal level acquiring step from a signal level of the same equipment, a same operational segment, and a same frequency band during normal operation; and
an abnormal part specifying step of specifying an abnormal part of the equipment on a basis of the degree of deviation calculated in the degree-of-deviation calculating step.

13. The abnormality diagnosis method according to claim 12, further comprising:

a normal signal level acquiring step of acquiring a signal level for each of predetermined frequency bands for each of the operational segments with respect to the sensor signal for each of the operational segments extracted in the in-operational-segment operational signal extracting step; and

a normal distribution determining and recording step of classifying the signal level acquired in the normal signal level acquiring step for each of the equipment, each of the operational segments, and each of the frequency bands and recording the classified signal level as a signal level during the normal operation of the equipment.

14. The abnormality diagnosis method according to claim 12 or 13, wherein the plurality of different types of sensors include an acoustic sensor, a vibration sensor, and an AE sensor.

# FIG.1

DIAGNOSIS TARGET EQUIPMENT — A

SENSOR — 20

ABNORMALITY DIAGNOSIS DEVICE — 1

OPERATIONAL SIGNAL COLLECTING UNIT — 11

IN-OPERATIONAL-SEGMENT OPERATIONAL SIGNAL EXTRACTING UNIT — 12

SIGNAL LEVEL ACQUIRING UNIT — 15

NORMAL SIGNAL LEVEL ACQUIRING UNIT — 13

DEGREE-OF-DEVIATION CALCULATING UNIT — 16

NORMAL DISTRIBUTION DETERMINING AND RECORDING UNIT — 14

ABNORMAL PART SPECIFYING UNIT — 17

DATABASE UNIT — 18

EXTRACTION CONDITIONS DATABASE — 18a

FREQUENCY BAND DATABASE — 18b

NORMAL DISTRIBUTION DATABASE — 18c

OPERATING CONDITIONS DATABASE — 18d

DEVIATION PATTERN DATABASE — 18e

EP 4 700 355 A1

# FIG.2

```
        ┌─────────────┐
        │    DATA     │
        │  RECORDING  │
        │ PROCESSING  │
        └──────┬──────┘
               │
               ▼
  ┌──────────────────────────┐
  │ COLLECT OPERATION SIGNAL │ ～S1
  └──────────┬───────────────┘
             │
             ▼
  ┌──────────────────────────┐
  │ EXTRACT OPERATION SIGNAL │ ～S2
  └──────────┬───────────────┘
             │
             ▼
  ┌──────────────────────────┐
  │   ACQUIRE SIGNAL LEVEL OF │ ～S3
  │  NORMAL OPERATION SIGNAL  │
  └──────────┬───────────────┘
             │
             ▼
  ┌──────────────────────────┐
  │   RECORD SIGNAL LEVEL     │
  │ DISTRIBUTION OF NORMAL    │
  │  OPERATION SIGNAL AND     │ ～S4
  │ CHARACTERISTIC AMOUNT OF  │
  │ SIGNAL LEVEL DISTRIBUTION │
  └──────────┬───────────────┘
             │
             ▼
        ┌─────────────┐
        │     END     │
        └─────────────┘
```

# FIG.3

(a)

(b)

(c)

EP 4 700 355 A1

# FIG.4

# FIG.5

# FIG.6

# FIG.7

ABNORMAL PART SPECIFYING PROCESSING

COLLECT OPERATION SIGNAL — S11

EXTRACT OPERATION SIGNAL — S12

ACQUIRE SIGNAL LEVEL FOR EACH FREQUENCY BAND — S13

CALCULATE DEGREE OF DEVIATION FROM SIGNAL LEVEL DISTRIBUTION OF NORMAL OPERATION SIGNAL — S14

SPECIFY ABNORMAL PART — S15

END

# FIG.8

(a)

OBTAINED DEVIATION PATTERN y'

(b)

PRE-REGISTERED DEVIATION PATTERN $y_k$

EP 4 700 355 A1

FIG.9

(a)

(b)

SOUND PRESSURE LEVEL(dB)

# FIG.10

MONITORING FREQUENCY

# FIG.11

(a)

|  | | y' |
|---|---|---|
| SEN-SOR | FREQUENCY BAND | OPERA-TIONAL SEGMENT 1 |
| ACOUS-TIC | 250Hz | 0 |
| | 1,000Hz | 0 |
| | 4,000Hz | 1 |
| VIBRA-TION | 250Hz | 0 |
| | 1,000Hz | 0 |
| | 4,000Hz | 1 |
| AE | 25kHz | 0 |
| | 100kHz | 0 |
| | 400kHz | 1 |
| | ABNORMAL PART | SCAR ON BEARING |

OBTAINED DEVIATION PATTERN y'

(b)

|  |  | $y_1$ | $y_2$ | $y_3$ | $\cdots$ | $y_{n-1}$ | $y_n$ |
|---|---|---|---|---|---|---|---|
| SEN-SOR | FREQUENCY BAND | OPERA-TIONAL SEGMENT 1 | OPERA-TIONAL SEGMENT 1 | OPERA-TIONAL SEGMENT 1 | $\cdots$ | OPERA-TIONAL SEGMENT k | OPERA-TIONAL SEGMENT k |
| ACOUS-TIC | 250Hz | 1 | 0 | 0 | | 0 | 0 |
| | 1,000Hz | 0 | 0 | 0 | | 1 | 0 |
| | 4,000Hz | 0 | 1 | 0 | | 1 | 0 |
| VIBRA-TION | 250Hz | 1 | 0 | 0 | | 0 | 0 |
| | 1,000Hz | 0 | 0 | 0 | | 1 | 0 |
| | 4,000Hz | 0 | 1 | 0 | | 1 | 0 |
| AE | 25kHz | 0 | 0 | 0 | | 0 | 0 |
| | 100kHz | 0 | 0 | 0 | | 1 | 0 |
| | 400kHz | 0 | 1 | 0 | | 1 | 0 |
| | ABNORMAL PART | CRACK IN MOLD | SCAR ON BEARING | NO ABNOR-MALITY | | BREAK-AGE OF BEARING | NO ABNOR-MALITY |

PRE-REGISTERED DEVIATION PATTERN $y_k$

EP 4 700 355 A1

## INTERNATIONAL SEARCH REPORT

| International application No. |
| --- |
| **PCT/JP2024/018941** |

| A. | CLASSIFICATION OF SUBJECT MATTER |
| --- | --- |

*G01M 99/00*(2011.01)i; *G01H 17/00*(2006.01)i
FI:   G01M99/00 Z; G01H17/00 C

According to International Patent Classification (IPC) or to both national classification and IPC

| B. | FIELDS SEARCHED |
| --- | --- |

Minimum documentation searched (classification system followed by classification symbols)

G01M99/00; G01M13/00-13/045; G01H1/00-17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2017-32488 A (RICOH COMPANY, LTD.) 09 February 2017 (2017-02-09) paragraphs [0009]-[0014], fig. 1-4 | 1-14 |
| A | JP 2022-86643 A (TOPPAN PRINTING CO., LTD.) 09 June 2022 (2022-06-09) paragraphs [0019]-[0049], fig. 1-3 | 1-14 |
| A | JP 2013-19741 A (TOYOTA MOTOR EAST JAPAN INC.) 31 January 2013 (2013-01-31) paragraphs [0026]-[0055], fig. 1-4 | 1-14 |
| A | JP 2021-148457 A (JTEKT CORP.) 27 September 2021 (2021-09-27) paragraphs [0010]-[0076], fig. 1-6 | 1-14 |
| A | CN 115200699 A (CHINA CONSTRUCTION SEVENTH ENGINEERING DIVISION CORP. LTD.) 18 October 2022 (2022-10-18) paragraphs [0055]-[0063], fig. 1 | 1-14 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 July 2024** | **13 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/018941**

| Patent document cited in search report | | | Publication date (day/month/year) | Patent family member(s) | Publication date (day/month/year) |
|---|---|---|---|---|---|
| JP | 2017-32488 | A | 09 February 2017 | (Family: none) | |
| JP | 2022-86643 | A | 09 June 2022 | (Family: none) | |
| JP | 2013-19741 | A | 31 January 2013 | (Family: none) | |
| JP | 2021-148457 | A | 27 September 2021 | (Family: none) | |
| CN | 115200699 | A | 18 October 2022 | (Family: none) | |

Form PCT/ISA/210 (patent family annex) (July 2022)

**REFERENCES CITED IN THE DESCRIPTION**

**Patent documents cited in the description**

- JP 2008164490 A
- WO 2019017345 A
- WO 2020157818 A